# EUROPEAN PATENT APPLICATION

(11) **EP 2 327 743 A1**
(43) Date of publication of application: **01.06.2011**
(21) Application number: 10191179.0
(22) Date of filing: 15.11.2010
(51) Int. Cl.: C08L 25/18, C08L 65/00, H01G 9/00, H01G 9/028

(54) **Conductive polymer suspension and method for producing the same, conductive polymer material, electrolytic capacitor, and solid electrolytic capacitor and method for producing the same**

(30) Priority: 26.11.2009 JP 2009268632
(71) Applicant: NEC Tokin Corporation, Miyagi 982-8510 (JP)
(72) Inventor: Nobuta, Tomoki, Miyagi 982-8510 (JP); Takahashi, Naoki, Miyagi 982-8510 (JP); Sugawara, Yasuhisa, Miyagi 982-8510 (JP); Yoshida, Yuji, Miyagi 982-8510 (JP); Suzuki, Satoshi, Miyagi 982-8510 (JP); Tomioka, Yasuhiro, Miyagi 982-8510 (JP)
(74) Representative: Vossius & Partner

(57) **Abstract**

Provided are a conductive polymer suspension for providing a conductive polymer material having a high conductivity and a method for producing the same, and in particular, a solid electrolytic capacitor having a low ESR and a method for producing the same. The conductive polymer suspension is produced as follows: a conductive polymer is synthesized by chemical oxidative polymerization of a monomer giving a conductive polymer by using an oxidant in a solvent containing a dopant consisting of polysulfonic acid or a salt thereof; the conductive polymer is purified; and the purified conductive polymer is mixed with an oxidant in an aqueous solvent containing a polyacid component.

## Description

An exemplary aspect of the invention relates to a conductive polymer suspension and a method for producing the same, a conductive polymer material, an electrolytic capacitor, and a solid electrolytic capacitor and a method for producing the same.

Conductive organic materials are used for electrodes of capacitors, electrodes of solar cells such as dye-sensitized solar cells and organic thin film solar cells and electrodes of electroluminescence displays, and the like. As such conductive organic materials, those conductive polymers obtained by polymerizing pyrrole, thiophene, 3,4-ethylenedioxythiophene, aniline and the like are known.

Such conductive polymers are generally offered as dispersions (suspensions) or solutions in aqueous solvents or solutions in organic solvents; such dispersions and solutions are used as conductive polymer materials by removing the solvents at the time of use. However, even when the types of the conductive polymers are the same, the physical properties of the obtained conductive polymer materials are different from each other depending on the conditions of the dispersions; and hence the methods for producing such dispersions have hitherto been studied in various manners.

JP 07-90060 A discloses a solution (dispersion) of polythiophene and a method for producing the solution, and a technique of application of the solution (dispersion) to an antistatic treatment of a plastic molded article. The dispersion of polythiophene includes, as the dispersion medium, water or a mixture composed of a water-miscible organic solvent and water, a polythiophene formed of a structural unit of 3,4-dialkoxythiophene and a polyanion derived from a polystyrenesulfonic acid having a molecular weight falling within a range from 2,000 to 500,000. The polythiophene is obtained by chemical oxidative polymerization, in the presence of the polyanion of a polystyrenesulfonic acid having a molecular weight falling within a range from 2,000 to 500,000. It is described that a transparent antistatic film can be formed in this manner.

JP 2004-59666 A discloses a water dispersion of a complex between poly(3,4-dialkoxythiophene) and a polyanion and a method for producing the water dispersion, and a technique related to a coating composition containing the water dispersion and a coated substrate having a transparent conductive film formed by applying the composition. The water dispersion is obtained by polymerizing 3,4-dialkoxythiophene in an aqueous solvent by using peroxodisulfuric acid as an oxidant in the presence of a polyanion. Alternatively, the water dispersion is obtained by chemical oxidative polymerization of 3,4-dialkoxythiophene in an aqueous solvent by using an oxidant in the presence of a polyanion under the pH of the reaction solution lowered by adding an acid selected from the group consisting of water-soluble inorganic acids and organic acids. It is described that a conductive thin film excellent in transparency can be formed in this manner.

However, with a method which performs the chemical oxidative polymerization of 3,4-dialkoxythiophene in one stage in the presence of the polyanion acting as a dopant as is the case in the methods described in JP 07-90060 A and JP 2004-59666 A, the control of the doping rate is difficult to result in an excessive presence of the undoped polyanion, namely, the polyanion making no contribution to the conductivity. Thus, the methods described in JP 07-90060 A and JP 2004-59666 A are far from being satisfactory methods as the production method for obtaining a conductive polymer material having a higher conductivity.

The conductive polymer film obtained by the method described in JP 07-90060 A has a sufficient conductivity as an antistatic material, but hardly attains a conductivity sufficiently satisfying the requirement for lowering the ESR, for example, when used as a solid electrolyte in a capacitor. In other words, the surface resistivity of an antistatic film is generally classified to fall within a range from 10⁵ to 10¹⁴ Ω/□; when the conductivity is too high, there is a possibility of occurrence of an intense electrostatic discharge, and hence it is understood that the antistatic film does not have a conductivity so high as to rapidly dissipate the static charge of an charged object. Therefore, a material usable as an antistatic film is high in resistance as the solid electrolyte for use in capacitors and hence cannot satisfy the requirement of low resistance. Additionally, a capacitor including a solid electrolyte that contains excessive polyanions has a drawback of poor reliability, in particular, poor properties in a high humidity atmosphere.

An object of an exemplary aspect of the invention is to solve the above-described problems, specifically, to provide a conductive polymer suspension for providing a conductive polymer material having a high conductivity and a method for producing the same, and in particular to provide a solid electrolytic capacitor having a low ESR and a method for producing the same.

A method for producing a conductive polymer suspension according to an exemplary aspect of the invention comprises:
(a) synthesizing a conductive polymer (P1) by chemical oxidative polymerization of a monomer (M1) giving a conductive polymer by using an oxidant (O1) in a solvent containing a dopant consisting of a polysulfonic acid or a salt thereof;
(b) purifying the conductive polymer (P1); and
(c) mixing the purified conductive polymer (P1) with another oxidant (O2) in an aqueous solvent containing a polyacid component to obtain a conductive polymer suspension.

A conductive polymer suspension according to an exemplary aspect of the invention is obtained by an above-described method. A conductive polymer material according to an exemplary aspect of the invention is obtained by removing the solvent from an above-described conductive polymer suspension.

An electrolytic capacitor according to an exemplary aspect of the invention comprises an above-described conductive polymer suspension as an electrolyte. A solid electrolytic capacitor according to an exemplary aspect of the invention comprises a solid electrolyte layer including an above-described conductive polymer material.

A first method for producing a solid electrolytic capacitor according to an exemplary aspect of the invention comprises:
forming a dielectric layer on the surface of an anode conductor consisting of a valve action metal; and
forming on the dielectric layer a solid electrolyte layer comprising an conductive polymer material by applying or impregnating an above-described conductive polymer suspension onto the dielectric layer and by removing the solvent from the conductive polymer suspension.

A second method for producing a solid electrolytic capacitor according to an exemplary aspect of the invention comprises:
forming a dielectric layer on the surface of an anode conductor consisting of a valve action metal;
forming a first solid electrolyte layer including a conductive polymer (P2) by conducting on the dielectric layer a chemical oxidative polymerization or an electrolytic polymerization of a monomer (M2) giving the conductive polymer; and
forming on the first solid electrolyte layer a second solid electrolyte layer by applying or impregnating an above-described conductive polymer suspension onto the first solid electrolyte layer and by removing the solvent from the conductive polymer suspension.

Thus, an exemplary aspect of the invention can provide a conductive polymer suspension for providing a conductive polymer material having a high conductivity and a method for producing the same, and in particular, a solid electrolytic capacitor having a low ESR and a method for producing the same.

### BRIEF DESCRIPTION OF THE DRAWING

FIG. 1 is a schematic sectional view illustrating a structure of a solid electrolytic capacitor according to an exemplary embodiment; and
FIG. 2 is a chart showing X-ray diffractions of conductive polymer films formed in Example 1 and Comparative Example 2.

### DETAILED DESCRIPTION OF THE PREFERRED EMBODIMENT

### <Conductive polymer suspension and a method for producing the

A method for producing a conductive polymer suspension according to an exemplary embodiment is described.

### [Step (a)]

First, a conductive polymer (P1) is synthesized by chemical oxidative polymerization of a monomer (M1) giving a conductive polymer by using an oxidant (O1) in a solvent containing a dopant consisting of a polysulfonic acid or a salt of the polysulfonic acid (step (a)). Performance of the step (a) enables to obtain a conductive polymer (P1) having a high degree of polymerization and a high degree of crystallization.

The solvent in which the reaction is conducted is preferably selected as a solvent satisfactory in the compatibility with the monomer (M1). The solvent concerned may be water, an organic solvent or a water-mixed organic solvent. Specific examples of the organic solvent include: alcohol solvents such methanol, ethanol and propanol; aromatic hydrocarbon solvents such as benzene, toluene and xylene; aliphatic hydrocarbon solvents such as hexane; and lar solvents such as M,N-dimethylformamide, dimethyl sulfoxide, acetonitrile and acetone. As the organic solvent, these organic solvent compounds may be used each alone or in combinations of two or more thereof. As the organic solvent, at least one selected from the group consisting of water, alcohol solvents and aprotic polar solvents is preferably included; preferable among these solvent compounds is water, ethanol, dimethyl sulfoxide or a mixed solvent composed of ethanol or dimethyl sulfoxide and water.

The monomer (M1) can be appropriately selected from the group consisting of the monomers giving a conductive polymer. Specific examples of the monomer (M1) include pyrrole, thiophene, aniline and derivatives of these. Specific examples of the pyrrole derivatives include: 3-alkylpyrroles such as 3-hexylpyrrole; 3,4-dialkylpyrroles such as 3,4-dihexylpyrrole; 3-alkoxypyrroles such as 3-methoxypyrrole; and 3,4-dialkoxypyrroles such as 3,4-dimethoxypyrrole. Specific examples of the thiophene derivatives include: 3,4-ethylenedioxythiophene and derivatives thereof; 3-alkylthiophenes such as 3-hexylthiophene; and 3-alkoxythiophenes such as 3-methoxythiophene. Specific examples of the aniline derivatives include: 2-alkylanilines such as 2-methylaniline; and 2-alkoxyanilines such as 2-methoxyaniline. Preferable among these are 3,4-ethylenedioxythiophene represented by the following formula (1) or derivatives thereof. Examples of the derivatives of 3,4-ethylenedioxythiophene include 3,4-(1 -alkyl)ethylenedioxythiophenes such as 3,4-(1-hexyl)ethylenedioxythiophene. As the monomer (M1), these monomer (M1) compounds may be used each alone or in combinations of two or more thereof.

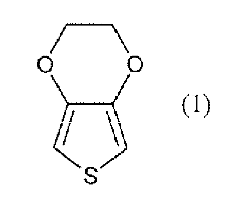

The concentration of the monomer (M1) in the solvent is not particularly limited because the monomer (M1) can be removed in the step (b) even when the concentration is excessive. However, for the purpose of obtaining the conductive polymer (P1) having a high conductivity in a satisfactory yield, the concentration of the monomer (M1) in the solvent is preferably 0.5 to 70% by weight and more preferably 1 to 50% by weight.

As the dopant, a polysulfonic acid or a salt thereof acid is used. Specific examples of the polysulfonic acid include polystyrenesulfonic acids, polyvinylsulfonic acids, polyestersulfonic acids, poly(2-acrylamide-2-methylpropanesuflonic acid)s and the copolymers including the structural units of these polysulfonic acids. Specific examples of the salt of the polysulfonic acid include lithium salts, sodium salts, potassium salts and ammonium salts of the polysulfonic acid. Among these, a polystyrenesulfonic acid having the structural unit represented by the following formula (2) is preferable. Polysulfonic acid compounds or the salts thereof serving as dopants may be used each alone or in combinations of two or more thereof.

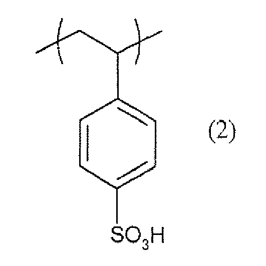

For the purpose of obtaining the conductive polymer (P 1) having a high conductivity, the weight average molecular weight of the polysulfonic acid is preferably 2,000 to 500,000 and more preferably 10,000 to 200,000.

The amount of the dopant used is not particularly limited because the dopant can be removed in the step (b) even when the dopant is added in an excessive amount. However, for the purpose of obtaining the conductive polymer (P1) having a high conductivity, the amount of the dopant used is preferably 0.1 to 100 parts by weight and more preferably 0.1 to 20 parts by weight in relation to 1 part by weight of the monomer (M1).

The oxidant (O1) is not particularly limited. Examples of the usable oxidant (O1) include: iron(III) salts of inorganic acids such as iron(III) chloride hexahydrate, anhydrous iron(III) chloride, iron(III) nitrate nonahydrate, anhydrous ferric nitrate, iron(III) sulfate n-hydrate (n = 3 to 12), ammonium iron(III) sulfate dodecahydrate, iron(III) perchlorate n-hydrate (n = 1,6) and iron(III) tetrafluoroborate; copper(II) salts of inorganic acids such as copper(II) chloride, copper(II) sulfate and copper(II) tetrafluoroborate; nitrosonium tetrafluoroborate; persulfates such as ammonium persulfate, sodium persulfate and potassium persulfate; periodares such as potassium periodate; hydrogen peroxide, ozone, potassium hexacyanoferrate(III), tetraammonium cerium(lV) sulfate dihydrate, bromine and iodine; and iron(III) salts of organic acids such as iron(III) p-toluenesulfonate. Among these, preferable are the salts of inorganic acids or persulfates, and particularly preferable is ammonium persulfate. As the oxidant (O1) these oxidant (O1) compounds may be used each alone or in combinations of two or more thereof.

The amount of the oxidant (O1) used is not particularly limited because the oxidant (O1) can be removed in the step (b) even when the oxidant (O1) is added in an excessive amount. However, for the purpose of obtaining a polymer having a high conductivity by performing the involved reaction in a milder oxidative atmosphere, the amount of the oxidant (O1) used is preferably 0.5 to 100 parts by weight and more preferably 1 to 40 parts by weight in relation to 1 part by weight of the monomer (M1).

The step (a) can also be conducted in the presence of a surfactant. The solubility of the monomer (M1) in water is low. Accordingly, when water is used as the solvent, the use of a surfactant enables to improve the dispersibility of the monomer (M1). The surfactant may be any of an anionic surfactant, a cationic surfactant, an amphoteric surfactant and a nonionic surfactant; preferable is dodecylbenzenesulfonic acid or polyethylene glycol. As the surfactant, these surfactant compounds may be used each alone or in combinations of two or more thereof.

The amount of the surfactant used is not particularly limited because the surfactant can be removed in the step (b) even when the surfactant is added in an excessive amount. However, the amount of the surfactant used is preferably 0.01 to 10 parts by weight and more preferably 0.1 to 5 parts by weight in relation to 1 part by weight of the monomer (M1).

The conductive polymer (P1) obtained by chemical oxidative polymerization of the monomer (M1) has the structural unit derived from the monomer (M1). For example, when 3,4-ethylenedioxythiophene represented by the formula (1) is used as the monomer (M1), the obtained conductive polymer (P1) has the structural unit represented by the following formula (3).

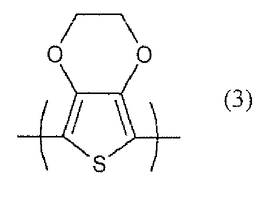

It is preferable to conduct the chemical oxidative polymerization under stirring. The reaction temperature of the chemical oxidative polymerization is not particularly limited; however, the chemical oxidative polymerization is conducted with the upper limit of the reaction temperature set at the reflux temperature of the solvent used, and the reaction temperature concerned is preferably 0 to 100ºC and more preferably 10 to 50ºC. When the reaction temperature is inappropriate, the conductivity of the obtained conductive polymer (P1) is sometimes degraded. The reaction time of the chemical oxidative polymerization depends on the type and the amount of the oxidant (O1) used, the reaction temperature, the stirring conditions and the like; the reaction time is preferably about 5 to 100 hours. It is to be noted that when the conductive polymer (P1) is produced, the reaction solution turns deep blue.

### [Step (b)]

Next, the conductive polymer (P1) is purified (step (b)). Specifically, from the reaction solution containing the conductive polymer (P1) having been obtained by chemical oxidative polymerization, the conductive polymer (P1) is separated and washed to remove the dopant, the monomer (M1), the oxidant (O1) and the oxidant having undergone the reaction. Performance of the step (b) enables to obtain the conductive polymer (P1) having a high purity.

Examples of the method for separating the conductive polymer (P1) from the reaction solution include filtration method and centrifugal separation method.

The washing with a solvent is preferably conducted by using a solvent capable of dissolving the monomer (M1) and/or the oxidant (O1) without dissolving the conductive polymer (P1). Specific examples of the washing solvent include: water; alcohol solvents such as methanol, ethanol and propanol; and aprotic polar solvents such as dimethyl sulfoxide, N,N-dimethylformamide and dimethylacetamide. As the washing solvent, these washing solvent compounds may be used each alone or in combinations of two or more thereof. The extent of the washing can be checked by pH measurement or colorimetric observation, using a test reagent or the like, of the washing solvent having been used for washing.

Further, it is preferable to subject the conductive polymer (P1) to washing with hot water and/or heat treatment because the metal component, halogen and the sulfuric acid component derived from the oxidant O1) can be removed to a higher extent. The heat treatment temperature is not particularly limited as long as the heat treatment temperature is equal to or lower than the decomposition temperature of the conductive polymer (P1); the heat treatment is preferably conducted at a temperature lower than 300ºC. An ion exchange treatment conducted with an ion exchange resin is also effective as a method for removing the components derived from the oxidant.

The impurities contained in the conductive polymer (P1) can be quantitatively determined by atomic absorption analysis, ICP luminescence analysis, ion chromatography or the like.

### [Step (c)]

Next, the purified conductive polymer (P1) is mixed with an oxidant (O2) in an aqueous solvent containing a polyacid component to obtain a conductive polymer suspension (step (c)). In the step (c), the polyacid acts as a dispersant, and hence a conductive polymer suspension satisfactory in dispersion can be obtained. The dispersion mechanism probably involves at least doping effect of a polyanion derived from the polyacid component.

As the aqueous solvent, water is preferable, and a mixed solvent composed of water and a water-soluble organic solvent may also be adopted. Specific examples of the water-soluble organic solvent include: protic polar solvents such as methanol, ethanol, propanol and acetic acid; and aprotic polar solvents such as N,N-dimethylformamide, dimethyl sulfoxide, acetonitrile and acetone.

The concentration of the conductive polymer (P1) in the aqueous solvent is preferably 0.1 to 20% by weight and more preferably 0.5 to 10% by weight.

As the polyacid component, a polyacid or a salt thereof can be used. Specific examples of the polyacid include: polycarboxylic acids such as polyacrylic acids, polymethacrylic acids and polymaleic acids; polysulfonic acids such as polyvinylsulfonic acids, poly(2-acrylamido-2-methylpropanesulfonic acid)s and polystyrenesulfonic acids; and copolymers having the structural units of these polyacids. Specific examples of the salts of the polyacids include lithium salts, sodium salts, potassium salts and ammonium salts of the polyacids. Among these, a polystyrenesulfonic acid having the structural unit represented by the formula (2) is preferable. As the polyacid component, these polyacid compounds may be used each alone or in combinations of two or more thereof.

For the purpose of obtaining the conductive polymer (P1) having a high conductivity, the weight average molecular weight of the polyacid component is preferably 2,000 to 500,000 and more preferably 10,000 to 200,000.

For the purpose of obtaining the conductive polymer (P1) having a high conductivity, the amount of the polyacid component used is preferably 20 to 3,000 parts by weight and more preferably 30 to 1,000 parts by weight in relation to 100 parts by weight of the conductive polymer (P1).

As the oxidant (02), the same oxidants used as the oxidant (O1) can be used. Among such oxidants, ammonium persulfate, hydrogen peroxide or the like is preferable. For the purpose of obtaining the conductive polymer (P1) having a high conductivity, the amount of the oxidant (02) used is preferably 0.5 to 50 parts by weight and more preferably 1 to 30 parts by weight in relation to I part by weight of the conductive polymer (P1).

The temperature of the step (c) is not particularly limited; however, the temperature of the step (c) is preferably within a range from 0ºC to 100ºC and more preferably within a range from 10ºC to 50ºC. The time of the step (c) is not particularly limited; however, the time of the step (c) is about 5 to 100 hours.

Application of the above-described ion exchange treatment after the step (c) enables to remove the ion components such as sulfate ion derived from the oxidant (O2). It is preferable to apply the ion exchange treatment step because the concerned step improves the film formability of the conductive polymer when a film is formed from the conductive polymer suspension by drying for removing the solvent of the suspension. It is to be noted that the concerned ion exchange treatment can be naturally substituted with a heretofore known treatment step corresponding thereto.

### [Step (d)]

It is preferable to further perform a step (d) of mixing at least one selected from the group consisting of erythritol and pentaerythritol during or after the step (c). Performance of the step (d) allows erythritol or pentaerythritol to interact with the polyacid component (undoped dopant anion (resistive component)) which is located in the vicinity of the conductive polymer (P 1) in the conductive polymer suspension, the interaction reduces the resistance between the conductive polymer (P1) particles and at the same time increases the density of the conductive polymer (P1), and hence the conductive polymer (P1) is enabled to have a further higher conductivity.

Erythritol is higher in crystallinity than the polyhydric alcohols such as sorbitol and maltose and accordingly low in hygroscopicity and hence is preferable from the viewpoint of easiness in handling. Erythritol is also known as a food additive used as a sweetener, is excellent in safety and stability, and is several-fold higher in solubility in water than in nonaqueous solvents such as ethylene glycol and glycerin, and hence erythritol provides an advantage of the high degree of freedom in designing the addition amount thereof.

Pentaerythritol is characterized by being slowly sublimed when heated, and by undergoing dehydration and polymerization when heated at a temperature equal to or higher than the melting point thereof. Thus, pentaerythritol has an advantage that the physical properties of an organic material are accordingly altered to improve the density and the strength thereof. Such reactivity originates from the chemical structure of pentaerythritol, and hardly results from such chemical structure as that of erythritol or sorbitol.

The mixing of erythritol or pentaerythritol in a concentration equal to or higher than the concentration of the conductive polymer (P1) in the conductive polymer suspension attains a more marked effect. It is to be noted that the upper limit of the mixing amount is not particularly limited as long as the mixing amount falls within the range in which erythritol or pentaerythritol is dissolved completely in the conductive polymer suspension.

A resin (binder) that functions as binding action may be added to the obtained conductive polymer suspension. Specific examples of the resin include polyester resins, polyethylene resins, polyamide resins, polyimide resins, polyether resins and polystyrene resins. From the viewpoint of not impairing the conductivity, the addition amount of the resin is preferably 0.01 to 20 parts by weight in relation to 100 parts by weight of the conductive polymer suspension.

The conductive polymer suspension according to an exemplary embodiment usually shows deep blue color.

### <Conductive polymer

By removing the solvent from the conductive polymer suspension according to an exemplary embodiment, a conductive polymer material can be obtained. The conductive polymer material has a high conductivity. It is to be noted that the conductive polymer (P1) is high in the degree of crystallization and disperses light, and hence the conductive polymer material has no transparency and shows a color close to black.

The removal of the solvent can be conducted by drying the conductive polymer. The drying temperature is not particularly limited as long as the drying temperature is equal to or lower than the decomposition temperature of the conductive polymer; the drying temperature is preferably 300°C or lower.

The conductive polymer material obtained by removing the solvent by drying is also provided with a physical property such that the water absorption amount is small. This is attributed, for example, to the fact that when the conductive polymer suspension contains a polyacid having sulfonic acid group and contains erythritol or pentaerythritol, esterification occurs during drying between the undoped sulfonic acid group and erythritol or pentaerythritol, and thus the hydrophilic groups disappear.

### <Electrolytic capacitor, solid electrolytic capacitor and methods for producing the

The conductive polymer suspension according to an exemplary embodiment can be used as an electrolyte of an electrolytic capacitor. Additionally, the conductive polymer material obtained by removing the solvent from the conductive polymer suspension according to an exemplary embodiment can be used as the solid electrolyte layer of a solid electrolytic capacitor. The high conductivity of the conductive polymer (P1) contained in the conductive polymer suspension or of the conductive polymer material obtained by removing the solvent from the conductive polymer suspension enables to obtain a capacitor having a low ESR. Further, the degree of crystallization of the conductive polymer (P1) is high and hence the oxygen barrier property is also correlatively high, and thus the improvement of the reliability of the capacitor is also sufficiently promising.

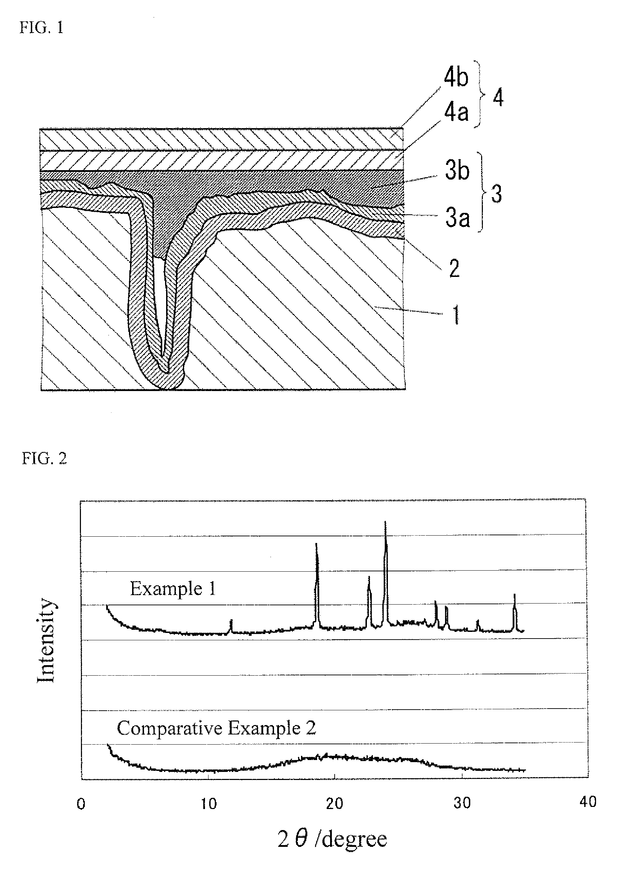

FIG. 1 shows a schematic sectional view illustrating the structure of a solid electrolytic capacitor according to an exemplary embodiment. The solid electrolytic capacitor has a structure in which dielectric layer 2, solid electrolyte layer 3 and cathode conductor 4 are formed in this order on anode conductor 1.

Anode conductor 1 is formed of: a plate, a foil or a wire of a valve action metal; a sintered body made of fine particles of a valve action metal; or a porous metal subjected to a surface area enlargement treatment by etching. Specific examples of the valve action metal include tantalum, aluminum, titanium, niobium and zirconium, and alloys of these. Among these, at least one valve action metal selected from the group consisting of aluminum, tantalum and niobium is preferable.

Dielectric layer 2 is a layer that can be formed by the electrolytic oxidation of the surface of anode conductor 1, and is also formed in the pores of a sintered body or a porous body. The thickness of dielectric layer 2 can be appropriately adjusted by the voltage of the electrolytic oxidation.

Solid electrolyte layer 3 includes at least the conductive polymer material obtained by removing the solvent from the above-described conductive polymer suspension. Examples of the method for forming solid electrolyte layer 3 include a method in which the above-described conductive polymer suspension is applied or impregnated onto dielectric layer 2, and the solvent is removed from the conductive polymer suspension.

As shown in FIG. 1, solid electrolyte layer 3 may also be designed to have a two-layer structure formed of first solid electrolyte layer 3a and second solid electrolyte layer 3b. In this case, solid electrolyte layer 3 can be formed as follows. First, first solid electrolyte layer 3a including the conductive polymer (P2) is formed on dielectric layer 2 by chemical oxidative polymerization or electrolytic polymerization, conducted on dielectric layer 2, of a monomer (M2) giving the conductive polymer. Next, second solid electrolyte layer 3b is formed on first solid electrolyte layer 3a by applying or impregnating the above-described conductive polymer suspension onto first solid electrolyte layer 3a and by removing the solvent from the conductive polymer suspension.

As the monomer (M2), at least one selected from the group consisting of pyrrole, thiophene, aniline and derivatives of these can be used. As the dopant used when the conductive polymer (P2) is obtained by chemical oxidative polymerization or electrolytic polymerization of the monomer (M2), sulfonic acid compounds such as alkylsulfonic acids, benzenesulfonic acid, naphthalenesulfonic acid, anthraquinonesulfonic acid, camphorsulfonic acid and derivatives of these are preferable. With respect to the molecular weight of the dopant, dopants ranging from low molecular weight compounds to high molecular weight compounds can be used in an appropriately selected manner. The solvent may be exclusively water or a mixed solvent composed of water and a water-soluble organic solvent.

The conductive polymer (P1) included in first solid electrolyte layer 3a and the conductive polymer (P2) included in second solid electrolyte layer 3b each preferably include at least the same type of polymer.

Further, solid electrolyte layer 3 may also include: a conductive polymer obtained by polymerization of pyrrole, thiophene, aniline or a derivative of these; an oxide derivative such as manganese dioxide or ruthenium oxide; and an organic semiconductor such as TCNQ (7,7,8,8-tetracyanoquinodimethane complex salt).

The application or impregnation method is not particularly limited. However, for the purpose of sufficiently filling the conductive polymer suspension in the interior of the pores of the porous material, dielectric layer 2 is preferably allowed to stand for a few minutes to a few tens minutes after application or impregnation. A repeated immersion method, a pressure reduction method or a pressurization method is preferable.

The removal of the solvent from the conductive polymer suspension can be conducted by drying the conductive polymer. The drying temperature is not particularly limited as long as the drying temperature is within a temperature range in which the solvent removal is possible; however, from the viewpoint of the prevention of element degradation by heat, the upper limit of the drying temperature is preferably lower than 300ºC. It is necessary to appropriately optimize the drying time according to the drying temperature; the drying time is not particularly limited as long as the drying time is within a range in which the conductivity is not impaired.

Cathode conductor 4 is not particularly limited as long as cathode conductor 4 is a conductor; however, cathode conductor 4 may also be designed to have a two-layer structure formed of carbon layer 4a made of graphite or the like and silver conductive resin layer 4b.

### EXAMPLE

Hereinafter, an exemplary embodiment is described more specifically with reference to Examples; however, an exemplary embodiment is not limited only to these Examples.

### <Example 1>

### [Step (a)]

In 100 g of water, 6 g of an aqueous solution containing 20% by weight of a polystyrenesulfonic acid (weight average molecular weight: 50,000) as the dopant was placed and stirred at normal temperature for 30 minutes. Then, in the resulting solution, 1.28 g of 3.4-ethylenedioxythiophene as the monomer (M1) was mixed and then further stirred at room temperature for 30 minutes. Then, to the resulting solution, 5.08 g of an aqueous solution containing 30% by weight of ammonium persulfate as the oxidant (O1) was added in five separate equal-amount addition operations at 10-minute intervals, then the resulting solution was stirred at room temperature for 50 hours to conduct chemical oxidative polymerization and thus poly(3,4-ethylenedioxythiophene) was synthesized. In this case, the solution turned from yellow through pale green, green and pale navy blue to black.

### [Step (b)]

The obtained solution was filtered by using a reduced pressure filtration apparatus to collect a powder. The obtained powder was washed with purified water to remove the excessive oxidant (O1) and the excessive dopant. The washing with purified water was repeated until the acidity of the filtrate came to be pH 6 to 7. Thereafter, the powder was washed with ethanol to remove the monomer (M1). The washing with ethanol was conducted until the filtrate came to be colorless and transparent. In this case, the powder showed a deep blue color.

### [Step (c)]

In 50 ml of water, 0.5 g of the purified powder was dispersed, and then 1.9 g of an aqueous solution containing 20% by weight of a polystyrenesulfonic acid (weight average molecular weight: 50,000) as the polyacid component was added. To the mixed solution, 1.5 g of an aqueous solution containing 30% by weight of ammonium persulfate as the oxidant (O2) was added and stirred at room temperature for 50 hours. The obtained polythiophene suspension was deep navy blue.

The obtained polythiophene suspension was dropped onto a glass substrate in an amount of 100 µl, the substrate was dried in a thermostatic chamber set at 150ºC to form a conductive polymer film. Then, the surface resistance (Ω/□) and the film thickness of the conductive polymer film were measured by four-terminal method, and the conductivity (S/cm) of the conductive polymer film was derived. The result thus obtained is shown in Table 1. Additionally, for the purpose of evaluating the crystallinity of the formed conductive polymer film, the X-ray diffraction of the conductive polymer film was measured, wherein the measurement was conducted by scanning the 20 range from 5 to 40°. The measurement result thus obtained is shown in FIG. 2. Further, a portion of the formed conductive polymer film was sampled, and the thermogravimetric/differential thermal analysis (TG-DTA) was performed. Under the measurement conditions that the temperature increase rate was 10ºC/min, the atmosphere was the air and the temperature range was from 20ºC to 400°C, the weight reduction ratio between from 100ºC to 260°C was measured. The result thus obtained is shown in Table 2

### <Example 2>

### [Step (a)]

In 100 g of water, 6 g of an aqueous solution containing 20% by weight of a polystyrenesulfonic acid (weight average molecular weight: 50,000) as the dopant was placed and stirred at normal temperature for 30 minutes. Then, in the resulting solution, a solution prepared by mixing 1.28 g of 3,4-ethylenedioxythiophene and 10 g of methyl sulfoxide as the monomers (M1) was placed and then further stirred at room temperature for 30 minutes. Then, to the resulting solution, 5.08 g of an aqueous solution containing 30% by weight of ammonium persulfate as the oxidant (O1) was added in five separate equal-amount addition operations at 10-minute intervals, then the resulting solution was stirred at room temperature for 50 hours to conduct chemical oxidative polymerization and thus poly(3,4-ethylenedioxythiophene) was synthesized. In this case, the solution turned from yellow through pale green, green and pale navy blue to black.

A polythiophene suspension was produced by operating in the same manner as in Example 1 in the step (b) and the operations subsequent thereto. In the same manner as in Example 1, a conductive polymer film was formed, and then the derivation of the conductivity and the thermogravimetric/differential thermal analysis (TG-DTA) of the conductive polymer film were performed. The results thus obtained are shown respectively in Tables 1 and 2.

### <Example 3>

A polythiophene suspension was produced by operating in the same manner as in Example 1 except that in the step (a) an ethanol solution containing 30% by weight of iron(III) p-toluenesulfonate as the oxidant (O1) was used in place of the aqueous solution of ammonium persulfate. In the same manner as in Example 1, a conductive polymer film was formed, and then the conductivity of the conductive polymer film was derived. The result thus obtained is shown in Table 1.

### <Example 4>

A polythiophene suspension was produced by operating in the same manner as in Example I except that a polystyrenesulfonic acid (weight average molecular weight: 14,000) was used as the dopant in the step (a). In the same manner as in Example 1, a conductive polymer film was formed, and then the conductivity of the conductive polymer film was derived. The result thus obtained is shown in Table 1.

### <Example 5>

A polythiophene suspension was produced by operating in the same manner as in Example 1 except that a polystyrenesulfonic acid (weight average molecular weight 2,000) was used as the dopant in the step (a). In the same manner as in Example 1 , a conductive polymer film was formed, and then the conductivity of the conductive polymer film was derived, The result thus obtained is shown in Table 1.

### <Example 6>

A polythiophene suspension was produced by operating in the same manner as in Example 1 except that in the step (a) an aqueous solution containing 20% by weight of polyvinyl sulfonic acid (weight average molecular weight: 10,000) as the dopant was used in place of the aqueous solution of a polystyrenesulfonic acid. In the same manner as in Example 1, a conductive polymer film was formed, and then the conductivity of the conductive polymer film was derived. The result thus obtained is shown in Table 1.

### <Example 7>

A polythiophene suspension was produced by operating in the same manner as in Example 1 except that in the step (a) an aqueous solution containing 25% by weight of polyestersulfonic acid (weight average molecular weight: 30,000) as the dopant was used in place of the aqueous solution of a polystyrenesulfonic acid. In the same manner as in Example 1, a conductive polymer film was formed, and then the conductivity of the conductive polymer film was derived. The result thus obtained is shown in Table 1.

### <Example 8>

A polythiophene suspension was produced by operating in the same manner as in Example 1 except that in the step (c) the addition amount of the aqueous solution of a polystyrenesulfonic acid used was set at 25g. In the same manner as in Example 1, a conductive polymer film was formed, and then the conductivity of the conductive polymer film was derived. The result thus obtained is shown in Table 1.

### <Example 9>

A polythiophene suspension was produced by operating in the same manner as in Example 1 except that in the step (b) the obtained powder was washed with purified water and ethanol, and then further washed with purified hot water. In the same manner as in Example I , a conductive polymer film was formed, and then the conductivity of the conductive polymer film was derived. The result thus obtained is shown in Table 1.

### <Example 10>

A polythiophene suspension was produced by operating in the same manner as in Example 1 except that in the step (b) the obtained powder was washed with purified water and ethanol, and then further heat treated in a thermostatic chamber set at 125°C. In the same manner as in Example 1, a conductive polymer film was formed, and then the conductivity of the conductive polymer film was derived. The result thus obtained is shown in Table 1.

### <Example 11>

### [Step (a)]

In 100 g of water, 6 g of an aqueous solution containing 20% by weight of a polystyrenesulfonic acid (weight average molecular weight: 50,000) as the dopant was placed and stirred at normal temperature for 30 minutes. Then, to the resulting solution, 2 g of polyethylene glycol (weight average molecular weight: 4,000) functioning as a surfactant was added and stirred for 30 minutes. To the resulting solution, 1.28 g of 3,4-ethylenedioxythiophene as the monomer (M1) was mixed and then further stirred at room temperature for 60 minutes. Then, to the resulting solution, 5.08 g of an aqueous solution containing 30% by weight of ammonium persulfate as the oxidant (O1) was added in five separate equal-amount addition operations at 10-minute intervals, then the resulting solution was stirred at room temperature for 50 hours to conduct chemical oxidative polymerization and thus poly(3,4-ethylenedioxythiophene) was synthesized. In this case, the solution turned from yellow through pale green, green and pale navy blue to black.

### [Step (b)]

From the obtained dispersion, a powder was collected by using a centrifugal separator {5,000 rpm). The powder was washed by decantation in the centrifugal separator by using purified water to remove the excessive oxidant (O1) and the excessive dopant. The washing with purified water was repeated until the acidity of the supernatant liquid came to be pH 6 to 7.

A polythiophene suspension was produced by performing the step (c) in the same manner as in Example 1. In the same manner as in Example 1, a conductive polymer film was formed, and then the conductivity of the conductive polymer film was derived. The result thus obtained is shown in Table 1.

### <Example 12>

In 10 g of the polythiophene suspension obtained in Example 1, 5 g of an amphoteric ion exchange resin (trade name: MB-1, ion exchange type: -H/-OH, manufactured by Organo Corp.) was mixed and stirred at room temperature for 1 hour to remove the sulfate ion derived from the oxidant, and thus a polythiophene suspension was produced. The pH of the polythiophene suspension thus obtained was verified to be increased by about 1 as compared to the pH of the polythiophene suspension before the mixing of the ion exchange resin. In the same manner as in Example 1, a conductive polymer film was formed, and then the conductivity of the conductive polymer film was derived. The result thus obtained is shown in Table 1.

### <Example 13>

In 10 g of the polythiophene suspension obtained in Example 1, 1 g of erythritol was further dissolved at room temperature, and thus a polythiophene suspension was produced. In the same manner as in Example 1, a conductive polymer film was formed, and then the conductivity of the conductive polymer film was derived. The result thus obtained is shown in Table 1.

### <Example 14>

In 10 g of the polythiophene suspension obtained in Example 1, 0,5 g of pentaerythritol was further dissolved at room temperature, and thus a polythiophene suspension was produced. In the same manner as in Example 1, a conductive polymer film was formed, and then the conductivity of the conductive polymer film was derived. The result thus obtained is shown in Table 1.

### <Example 15>

Porous aluminum was used as the anode conductor consisting of a valve action metal, and an oxide coating film serving as a dielectric layer was formed on the surface of the aluminum metal by anodic oxidation. Next, the anode conductor with the dielectric layer formed thereon was immersed in and taken out from the polythiophene suspension produced in Example 1, and then dried and solidified at 150ºC to form a solid electrolyte layer. On the solid electrolyte layer, a graphite layer and a silver-containing resin layer were formed in this order, and thus a solid electrolytic capacitor was obtained.

The ESR (equivalent series resistance) of the obtained solid electrolytic capacitor was measured by using an LCR meter at a frequency of 100 kHz. The ESR value was normalized from the value corresponding to the total cathode area to the value corresponding to the unit area (1 cm²). Further, after the obtained solid electrolytic capacitor had been allowed to stand in an atmosphere set at 125°C for 500 hours, the ESR change ratio at 100 kHz was measured. Here, the ESR change ratio was calculated with the formula, (ESR after 500-hour standing) / (ESR before standing) x 100 [%]. The results thus obtained are shown in Table 3.

### <Example 16>

Porous aluminum was used as the anode conductor consisting of a valve action metal, and an oxide coating film was formed on the surface of the aluminum metal by anodic oxidation. Next, the anode conductor with the dielectric layer formed thereon was immersed in and taken out from a monomer solution prepared by dissolving 10 g of pyrrole as the monomer (M2) in 200 ml of purified water and immersed in and taken out from an oxidant solution prepared by dissolving 20 g of p-toluenesulfonic acid as the dopant and 10 g of ammonium persulfate as the oxidant in 200 ml of purified water, in this order and repeatedly 10 times, to conduct the chemical oxidative polymerization, and thus a first solid electrolyte layer was formed.

The polythiophene suspension produced in Example I was dropped onto the first solid electrolyte layer, and dried and solidified at 150ºC to form a second solid electrolyte layer. On the second solid electrolyte layer, a graphite layer and a silver-containing resin layer were formed in this order, and thus a solid electrolytic capacitor was obtained.

In the same manner as in Example 15, the ESR (equivalent series resistance) and the ESR change ratio of the obtained solid electrolytic capacitor were measured. The results thus obtained are shown in Table 3.

### <Example 17>

A solid electrolytic capacitor was produced by performing in the same manner as in Example 16 except that the polythiophene suspension produced in Example 13 was used. In the same manner as in Example 15, the ESR (equivalent series resistance) and the ESR change ratio of the solid electrolytic capacitor were measured. The results thus obtained are shown in Table 3.

### <Example 18>

A solid electrolytic capacitor was produced by performing in the same manner as in Example 15 except that porous tantalum was used as the anode conductor consisting of a valve action metal. In the same manner as in Example 15, the ESR (equivalent series resistance) and the ESR change ratio of the solid electrolytic capacitor were measured. The results thus obtained are shown in Table 3.

### <Comparative Example 1>

A polythiophene suspension was produced by dissolving 2 g of a polystyrenesulfonic acid (weight average molecular weight: 4,000), 0.5 g of3,4-ethylenedioxythiophene and 0.05 g of iron(III) sulfate in 20 ml of water, and by introducing air into the resulting solution over a period of 24 hours. In the same manner as in Example I , a conductive polymer film was formed, and then the conductivity of the conductive polymer film was derived. The result thus obtained is shown in Table 1.

### <Comparative Example 2>

A polythiophene suspension was produced in the same manner as in Comparative Example 1 except that a polystyrenesulfonic acid (weight average molecular weight: 50,000) was used in place of a polystyrenesulfonic acid (weight average molecular weight: 4,000). In the same manner as in Example 1, a conductive polymer film was formed, and then the derivation of the conductivity, the X-ray diffraction measurement and the thermogravimetric/differential thermal analysis (TG-DTA) of the conductive polymer film were performed. The results thus obtained are respectively shown in Table 1, FIG. 2 and Table 2.

### <Comparative Example 3>

A solid electrolytic capacitor was produced by performing in the same manner as in Example 15 except that the polythiophene suspension produced in Comparative Example 2 was used. In the same manner as in Example 15, the ESR (equivalent series resistance) and the ESR change ratio of the solid electrolytic capacitor were measured. The results thus obtained are shown in Table 3.

**Table 1**

| | Conductivity (S/cm) |
|---|---|
| Example 1 | 180 |
| Example 2 | 200 |
| Example 3 | 160 |
| Example 4 | 190 |
| Example 5 | 160 |
| Example 6 | 130 |
| Example 7 | 160 |
| Example 8 | 35 |
| Example 9 | 200 |
| Example 10 | 210 |
| Example 11 | 190 |
| Example 12 | 170 |
| Example 13 | 300 |
| Example 14 | 280 |
| Comparative Example 1 | 10 |
| Comparative Example 2 | 15 |

**Table 2**

| | Thermal weight reduction ratio (%) |
|---|---|
| Example 1 | 3.7 |
| Example 2 | 1.8 |
| Comparative Example 2 | 5.9 |

**Table 3**

| | ESR (mΩ.cm) | ESR change ratio (%) |
|---|---|---|
| Example 15 | 2.0 | 2.1 |
| Example 16 | 1.8 | 2.2 |
| Example 17 | 1.4 | 1.9 |
| Example 18 | 2.1 | 2.1 |
| Comparative Example 3 | 3.4 | 5.4 |

As shown in Table 1, the conductive polymer films formed in Examples I to 14 were all higher in conductivity than the conductive polymer films formed in Comparative Examples 1 and 2. In this way, by passing through the steps (a) to (c), (1) the choice of the dopant is made wider, (2) a solvent composition having a high compatibility with the monomer can be selected to lead to a high degree of polymerization, and (3) washing is easily conducted and hence a high purity can be attained.

Additionally, each of the conductive polymer films formed in Examples 9 and 10 where poly(3,4-ethylenedioxythiophene) was subjected to a hot water washing and/or a heat treatment in the step (b) had a higher conductivity. This is probably because the hot water used enabled the unnecessary components to be higher in solubility or the applied heating enabled the volatile components to be removed, and hence a further higher purity level was able to be attained.

Additionally, each of the conductive polymer films formed in Examples 13 and 14 where the step (d) was performed after the step (c) had a higher conductivity. This is probably because erythritol or pentaerythritol interacted with a polystyrenesulfonic acid which was located in the vicinity of the poly(3,4-ethylenedioxythiophene) particles in the polythiophene suspension, and consequently the interaction reduced the resistance between the poly(3,4-ethylenedioxythiophene) particles, and at the same time, increased the density of poly(3,4-ethylenedioxythiophene).

From the measurement results: of the X-ray diffraction shown in FIG. 2, it was able to be verified that the crystallinity of the conductive polymer film formed in Example 1 was higher than that of the conductive polymer film formed in Comparative Example 2. Consequently, the poly(3,4-ethylenedioxythiophene) in the obtained polythiophene suspension was satisfactory in the electron conduction between the polymer chains and hence came to be highly conductive. It is to be noted that the conductive polymer film formed in Example I was high in the degree of crystallization so as to disperse light, and hence had no transparency to show a color close to black.

As shown in Table 2, it was verified that the conductive polymer films formed in Examples 1 and 2 each had a smaller thermal weight reduction ratio and a higher degree of polymerization than the conductive polymer film formed in Comparative Example 2.

As shown in Table 3, in each of the solid electrolytic capacitors produced in Examples 15 to 18, because of the high conductivity of poly(3,4-ethylenedioxythiophene), the resistance of the solid electrolyte was able to be reduced, and thus the resistance (ESR) of the solid electrolytic capacitor was able to be reduced. Additionally, as shown in Table 2, the thermal weight reduction ratios of the conductive polymer films at high temperatures were small and the heat resistances of the conductive polymer films were satisfactory at high temperatures, and hence solid electrolytic capacitors small in ESR degradation even at 125ºC were obtained.

## Claims

1. A method for producing a conductive polymer suspension, comprising:
(a) synthesizing a conductive polymer (P1) by chemical oxidative polymerization of a monomer (M1) giving a conductive polymer by using an oxidant (O1) in a solvent containing a dopant consisting of a polysulfonic acid or a salt thereof;
(b) purifying the conductive polymer (p1); and
(c) mixing the purified conductive polymer (P1) with another oxidant (O2) in an aqueous solvent containing a polyacid component to obtain a conductive polymer suspension.

2. The method for producing a conductive polymer suspension according to Claim 1, wherein the step (a) is conducted in the presence of a surfactant.

3. The method for producing a conductive polymer suspension according to Claim 1 or 2, wherein the conductive polymer (P1) is washed in the step (b) by using a solvent capable of dissolving the monomer (M1) and/or the oxidant (O1).

4. The method for producing a conductive polymer suspension according to Claim 3, wherein the conductive polymer (P1) is subjected in the step (b) to a hot water washing and/or a heat treatment.

5. The method for producing a conductive polymer suspension according to any one of Claims 1 to 4, wherein the amount of the polyacid component used in the step (c) is 20 to 3,000 parts by weight in relation to 100 parts by weight of the conductive polymer (P1).

6. The method for producing a conductive polymer suspension according to any one of Claims 1 to 5, further comprising:
(d) mixing at least one selected from the group consisting of erythritol and pentaerythritol.

7. The method for producing a conductive polymer suspension according to any one of Claims 1 to 6, further comprising removing an ionic component derived from the oxidant (O2).

8. The method for producing a conductive polymer suspension according to any one of Claims 1 to 7, further comprising adding a binder.

9. A conductive polymer suspension obtained by the method according to any one of Claims 1 to 8.

10. A conductive polymer material obtained by removing the solvent from the conductive polymer suspension according to Claim 9.

11. An electrolytic capacitor comprising as an electrolyte the conductive polymer suspension according to Claim 9.

12. A solid electrolytic capacitor comprising a solid electrolyte layer including the conductive polymer material according to Claim 10.

13. The solid electrolytic capacitor according to Claim 12, comprising an anode conductor consisting of a valve action metal and a dielectric layer formed on a surface of the anode conductor, wherein the solid electrolyte layer is formed on the dielectric layer.

14. A method for producing a solid electrolytic capacitor, comprising:
forming a dielectric layer on a surface of an anode conductor consisting of a valve action metal; and
forming on the dielectric layer a solid electrolyte layer comprising a conductive polymer material by applying or impregnating the conductive polymer suspension according to Claim 9 onto the dielectric layer and by removing the solvent from the conductive polymer suspension.

15. A method for producing a solid electrolytic capacitor, comprising:
forming a dielectric layer on a surface of an anode conductor consisting of a valve action metal;
forming a first solid electrolyte layer comprising a conductive polymer (P2) by conducting on the dielectric layer a chemical oxidative polymerization or an electrolytic polymerization of a monomer (M2) giving a conductive polymer; and
forming on the first solid electrolyte layer a second solid electrolyte layer by applying or impregnating the conductive polymer suspension according to Claim 9 onto the first solid electrolyte layer and by removing the solvent from the conductive polymer suspension.
